# EUROPEAN PATENT APPLICATION

(11) **EP 4 714 522 A1**
(43) Date of publication of application: **25.03.2026**
(21) Application number: 25195637.1
(22) Date of filing: 13.08.2025
(51) Int. Cl.: B01D 46/24, B01D 46/00, B01D 46/42

(54) **DEHYDRATING FILTER, PARTICULARLY FOR AIR CONDITIONING AND/OR REFRIGERATION SYSTEMS**

(30) Priority: 18.09.2024 IT 202400020731
(71) Applicant: Olab S.r.l., 25030 Torbole Casaglia (Brescia) (IT)
(72) Inventor: BOTTURA, Cesare, 25121 BRESCIA (IT)
(74) Representative: Modiano, Micaela Nadia

(57) **Abstract**

A dehydrating filter (1), particularly for air conditioning and/or refrigeration systems, which comprises:
- a main body (2) which has a substantially axially symmetrical geometry with respect to a longitudinal axis (3) with a circular base and defines inside it a first chamber (4) and a second chamber (5) which communicate with each other through a central hole (6);
- a valve assembly (7) which is accommodated in the first chamber (4) and has an actuation axis (8) substantially perpendicular to the longitudinal axis (3) and
- a filtering assembly (9) which is accommodated in the second chamber (5).

In more detail, the chambers (4, 5) are of the type that is open at the ends (2a, 2b) of the main body (2) for the insertion inside them of the valve assembly (7) and of the filtering assembly (9).

Advantageously, the following are also comprised:
- a first flanged assembly (10) removably associated with the main body (2) at a first end (2a) thereof which is located on the side of the first chamber (4) so as to close the first chamber (4);
- a second flanged assembly (11) removably associated with the main body (2) at a second end (2b) thereof which is opposite with respect to the first end (2a) on the side of the second chamber (5) so as to close the second chamber (5);
- a third flanged assembly (13) removably associated with the main body (2) at a lateral opening (14) thereof which is located at a portion of the second chamber (5) and extends along a transverse axis (15) with respect to the longitudinal axis (3).

In more detail, the first flanged assembly (10) is shaped so as to be connectable to a first connecting pipe of a refrigeration system or the like, the second flanged assembly (11) is shaped so as to be connectable to a faucet (12) for charging and discharging a coolant gas, and the third flanged assembly (13) is shaped so as to be connectable to a second connecting pipe of a refrigeration system or the like.

## Description

The present invention relates to a dehydrating filter, particularly for air conditioning and/or refrigeration systems.

Dehydrating filters, particularly those used in refrigeration circuits, have dimensions that are directly proportional to the quantity of gas that it is intended to filter and are components that are vital to the reliability and duration of the system.

Such dehydrating filters have a core, which makes it possible to limit the passage of water and acids, so preventing the corrosion of the metallic surfaces with which the gas comes into contact, most importantly the compressor, and which makes it possible to prevent the "decomposition" of the gas into oil and vice versa.

There are many different types of dehydrating filters and their use is very widespread in many and varied sectors.

According to the sectors of use, the entry/exit connections and the type of materials used may vary.

In the air conditioning and refrigeration sectors, there are dehydrating filters both of the hermetic type and of the type with an interchangeable core.

In more detail, conventional hermetic filters have ODS welded connections and consist of a device made up of a main body (normally made of painted ferrous material) into which the filtering element (which differs according to the coolant gas) is inserted, and two sleeves (generally made of brass/iron).

At the ends of the sleeves is a flaring, which allows the installation technician to insert the pipe to be connected to the filter and weld it, or braze weld it, with weld filler material.

The product is supplied sealed straight from the factory and therefore cannot be inspected.

Such conventional hermetic dehydrating filters are not devoid of drawbacks, among which is the fact that, at the manufacturing stage at the factory, there can be a great deal of discarded material if the sealing process (welding/braze welding) is not kept under control.

In fact, during the welding between the body and the sleeves, if the welding parameters are not precise and/or the filter is not correctly cooled by flushing it internally with cold gas, the high temperatures can damage the content of the filter.

If these internal elements are damaged, the efficiency of the end product is compromised.

Another drawback of conventional hermetic dehydrating filters consists in the fact that, during final installation on-site, the filter could be damaged by the braze welding of the connecting pipes.

At installation time, the technician must insert the copper pipe to be connected into the ODS pocket located at the ends of the filter, and then perform the operation to weld the two pipes with weld filler material (usually an alloy of silver or copper/phosphorus).

This operation is done while enfolding the filter in a wetted rag so as to keep the component cold and directing the welding torch outward (not in the direction of the filter).

If these recommendations are not followed, the internal elements will again be damaged and as a result the efficiency of the product is compromised.

A further drawback of conventional hermetic dehydrating filters consists in that, during operation, this type of filter may over time be susceptible to leaks from welds, in particular when used with R744 gas (CO₂) at high pressure (up to 150 bar).

In fact, welds are tested at the production stage, but they can have non-visible "blisters" inside, which under conditions of fatigue and at high pressure may expand until the weld itself fails, in so doing compromising the seal tightness of the entire system.

Furthermore, again in operation, the presence of water and acids with the passage of time gives rise to the formation of rust, which impairs the mechanical characteristics of the filter, rendering its use potentially hazardous.

To overcome, at least partially, the drawbacks described above, hermetic filters have been devised with threaded connections instead of welds.

By virtue of this contrivance, it is possible to overcome the drawbacks of overheating during the process of connection by the technician to the system in which they are to be used, although the other drawbacks described remain.

However, as the connections are threaded, great care must be taken because the threadings, if not correctly isolated with sealants or copper gaskets, could generate leaks of coolant gas.

Then, conventional interchangeable-core filters, with ODS-welded or threaded connections, consist of a device made up of a main housing (normally made of painted ferrous material) into which the filtering element (which differs according to the coolant gas) is inserted, and two sleeves (generally made of iron/brass) which are welded/braze welded thereto.

The ends of the sleeves can be two ODS-type connections or they can be threaded.

In the first solution, the ends of the sleeves have a flaring, which allows the installation technician to insert the pipe to be connected to the filter and weld it or braze weld it according to the material of the pipe to be connected is made.

In the second solution, female or male threadings of various types (SAE, NPT, GAS) are used.

The main housing is plugged with a blind flange, with holes in its outermost annulus, which is attached by means of a suitable number of screws, and with sealing gaskets of various types interposed.

The product is supplied assembled straight from the factory; some suppliers insert the filtering assembly, others supply it separately.

Conventional interchangeable-core filters are also not devoid of drawbacks, among which is the fact that, during final installation on-site, the filter could be damaged by the welding of the connecting pipes.

At installation time, the technician must insert the pipe to be connected into the ODS pocket located at the ends of the filter, and then perform the operation to weld the two pipes with weld filler material (if the pipe is copper; usually the pipe is made of an alloy of silver or copper/phosphorus).

This operation is performed while enfolding the filter in a wetted rag so as to keep the component cold and directing the welding torch outward (not in the direction of the filter), or while the filtering part is removed, which exposes it to the humidity and impurities of the environment.

Another drawback of conventional interchangeable-core filters, if the threaded connection solution is opted for, consists in having to exercise great care to properly isolate the threadings with sealants or copper gaskets.

In fact, if this is not done, it may result in the generation of coolant gas leaks.

A further drawback of conventional interchangeable-core filters consists in that, during operation, this type of filter may over time be susceptible to leaks from welds, in particular when used with R744 gas (CO₂) at high pressure (up to 150 bar).

In fact, welds are tested at the production stage, but they can have non-visible "blisters" inside, which under conditions of fatigue and at high pressure may expand until the weld itself fails, in so doing compromising the seal tightness of the entire system.

The same is true for the threaded solution: sealants applied at the installation stage may lose their efficacy over time and generate coolant leaks.

Another drawback of conventional interchangeable-core filters consists in that, again in operation, the presence of water and acids over time gives rise to the formation of rust, which impairs the mechanical characteristics of the filter, rendering its use potentially hazardous.

A further drawback of conventional interchangeable-core filters consists in that when the decision is made to replace the filtering part, it is essential to isolate the filter from the rest of the system which, as is well-known, is under pressure, release the residual pressure inside the filtering body, and, finally, proceed with the replacement of the cartridge.

The provision of shut-off valves, of discharge valves and the like is normally the responsibility of the designer of the system.

The loss of coolant gas into the environment is in any case to be avoided in all these devices, since the gases used are extremely expensive and in some cases highly polluting (they contribute to the greenhouse effect or they increase the hole in the ozone layer).

Furthermore, when the gas has exited from an air-conditioning/refrigerating circuit, the performance of the system is compromised (it is necessary to recharge it).

The aim of the present invention consists in providing a dehydrating filter that is capable of fully overcoming the complained-of drawbacks for conventional filters described above.

Within this aim, an object of the present invention consists in providing a dehydrating filter that is designed specifically for the sectors of air conditioning and refrigeration and therefore is adapted to operate with refrigerant gases.

Another object of the present invention consists in providing a dehydrating filter that is free from leaks between the body and the sleeve, therefore without compromising the seal of the valves and so resulting in production discards, or generating bursts in the welds as a result of the high pressure of the gas used.

A further object of the present invention is to provide a dehydrating filter that can be installed without the risk of overheating and damaging the sealing elements and the filtering element of the product.

Another object of the present invention consists in providing a dehydrating filter that is capable of offering the widest assurances of reliability, of efficiency and of operation.

A further object of the present invention is to provide a dehydrating filter that can be provided with known technology in the technical sector of interest and therefore can be produced at low cost.

This aim and these and other objects which will become more apparent hereinafter are achieved by a dehydrating filter, particularly for air conditioning and/or refrigeration systems, according to claim 1.

Further characteristics and advantages of the invention will become more apparent from the detailed description of a preferred, but not exclusive, embodiment of a dehydrating filter, particularly for air conditioning and/or refrigeration systems, illustrated by way of non-limiting example with the aid of the accompanying drawings wherein:

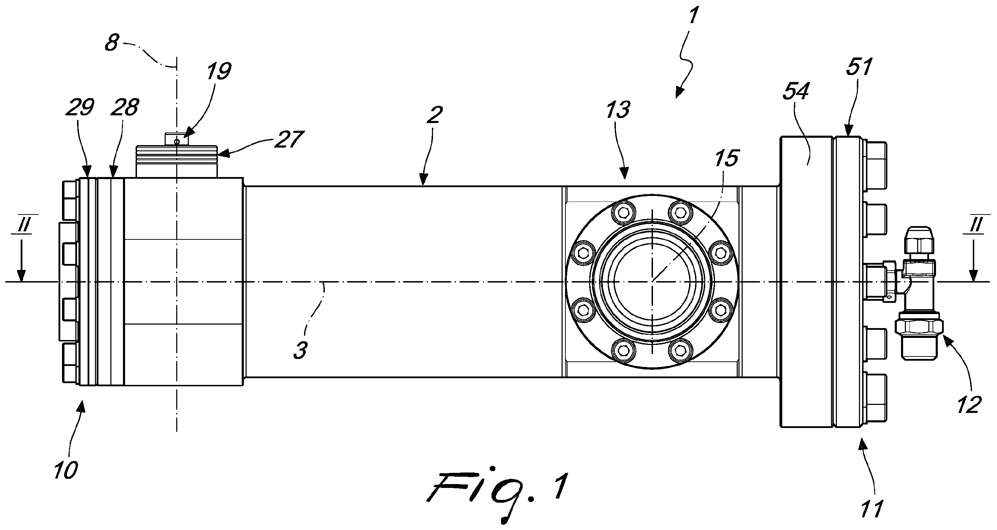

- Figure 1 is a first side view of a dehydrating filter according to the invention;

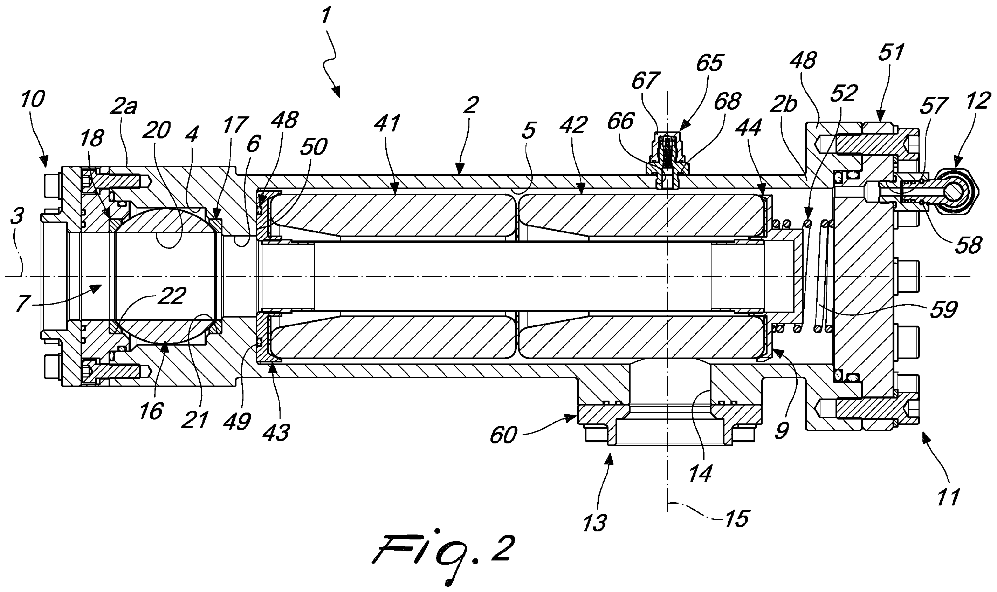

- Figure 2 is a cross-sectional view of the dehydrating filter shown in Figure 1, taken along the line II-II;

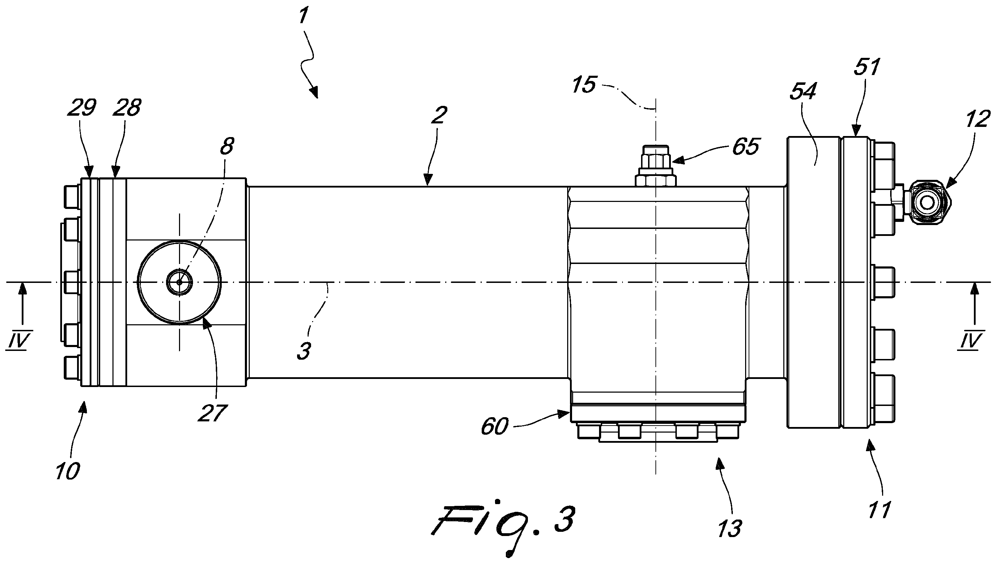

- Figure 3 is a second side view of the dehydrating filter shown in Figure 1, but rotated 90° with respect to its longitudinal axis;

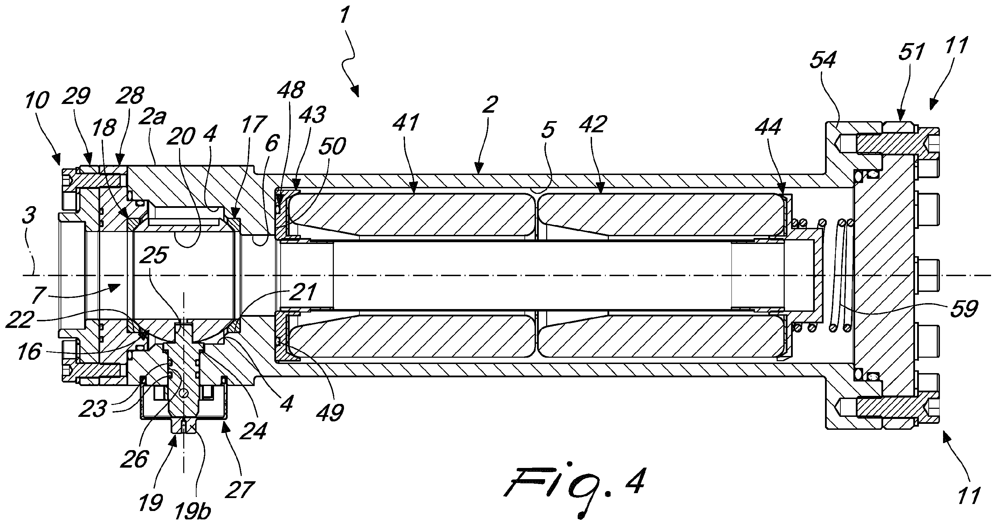

- Figure 4 is a cross-sectional view of the dehydrating filter shown in Figure 3, taken along the line IV-IV;

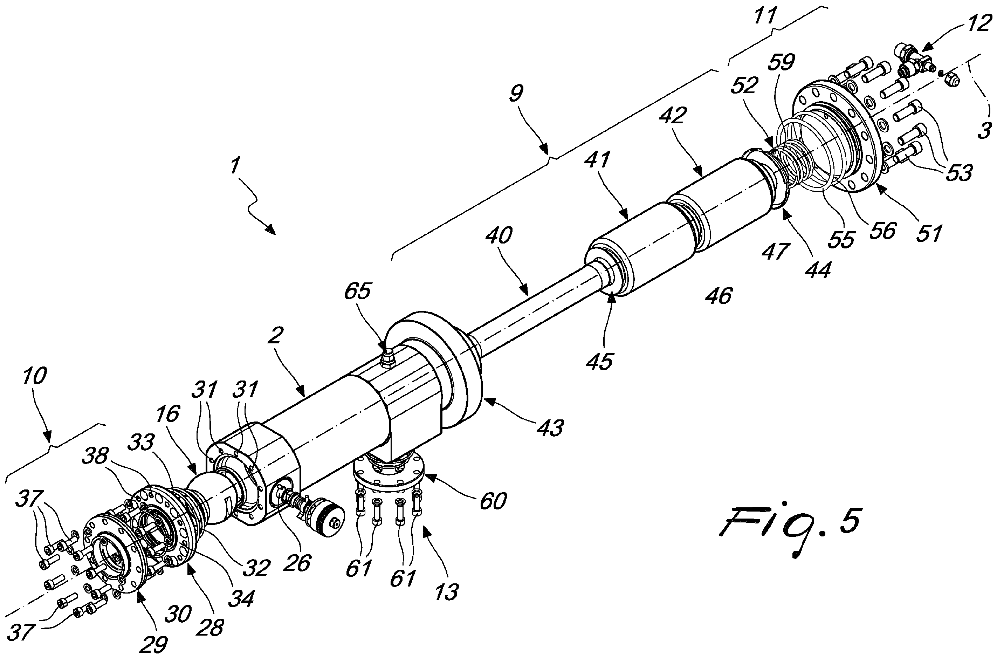

- Figure 5 is an exploded perspective view of the dehydrating device shown in the previous figures;

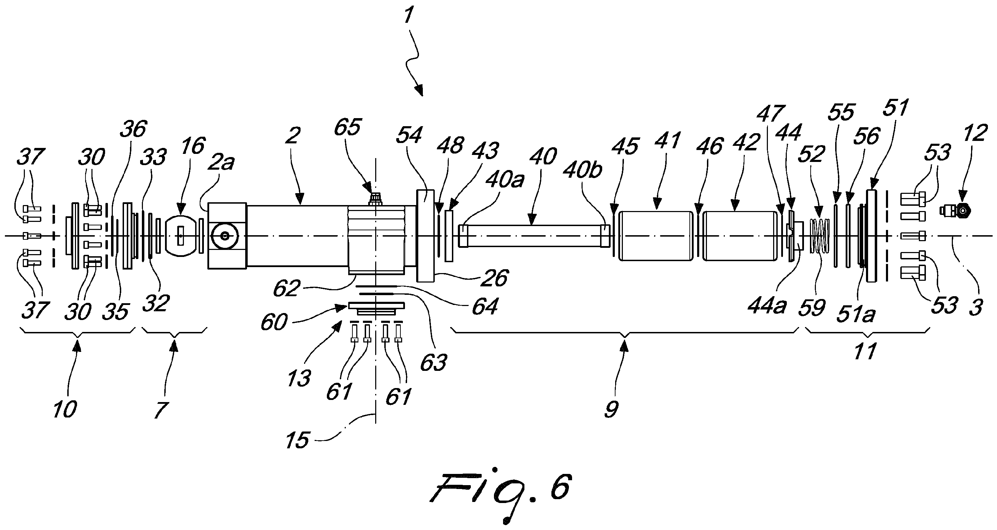

- Figure 6 is an exploded side view of the dehydrating device shown in the previous figures.

With reference to the figures, the dehydrating filter, particularly for air conditioning and/or refrigeration systems, is generally designated by the reference numeral 1 and comprises a main body 2 made, for example, of brass or stainless steel and having a substantially axially symmetrical geometry with respect to a longitudinal axis 3 with a circular base and defining inside it a first chamber 4 and a second chamber 5, which communicate with each other through a central hole 6.

As will be better described later, such chambers 4 and 5 are of the type that is open at the ends 2a and 2b of the main body 2 for the insertion inside them of a valve assembly 7, which has an actuation axis 8 substantially perpendicular to the longitudinal axis 3, and a filtering assembly 9.

According to the invention, at a first end 2a located on the side of the first chamber 4 and so as to close the latter, the dehydrating filter 1 is provided with a first flanged assembly 10 which is removably associated with the main body 2 and shaped so as to be connectable to a first connecting pipe of a refrigeration system or the like, as will be better described below.

Also according to the invention, at a second end 2b opposite to the first end 2a, which is located on the side of the second chamber 5 and so as to close the latter, the dehydrating filter 1 is provided with a second flanged assembly 11 which is removably associated with the main body 2 and shaped so as to be connectable to a faucet 12 for charging and discharging a coolant gas.

Completing the dehydrating filter 1, there is a third flanged assembly 13 removably associated with the main body 2 at a lateral opening 14 thereof which is located at a portion of the second chamber 5 and extends along a transverse axis 15 with respect to the longitudinal axis 3 and is shaped so as to be connectable to a second connecting pipe of a refrigeration system or the like, as will be better described below.

The valve assembly 7 comprises a ball 16, two sealing berths 17 and 18 and an actuation stem 19.

In more detail, the ball 16, made for example of brass or stainless steel, is accommodated in the first chamber 4 and has a through hole 20 which is dimensioned so that the central hole 6 of the main body 2 has a diameter greater than or equal to the inside diameter of the through hole 20 of the ball 4.

The two sealing berths 17 and 18, made for example of PTFE (an acronym for polytetrafluoroethylene), are accommodated, respectively, in two sealing seats 21 and 22 which are obtained, respectively, on the main body 2 and on the first flanged assembly 7 so as to support the ball 16 and hold it in position.

The actuation stem 19 is made for example of stainless steel and is completed with two annular gaskets 23 and with an anti-friction washer 24 made for example of PTFE (an acronym for polytetrafluoroethylene).

The actuation stem 19 extends along the actuation axis 8 and has a first end portion 19a, in a shape mating arrangement with a respective contoured cavity 25a of the ball 16 for the rotation of the latter about the actuation axis 8, and a second end portion 19b which is opposite with respect to the first end portion 19a and protrudes from the main body 2 through a passage hole 26 defined in the first chamber 4 along the actuation axis 8.

The actuation stem 19 is thus inserted into the passage hole 26 of the main body 2, along the actuation axis 8, from inside, and it is provided with two grooves for accommodating the two annular gaskets 23 which ensure the seal between the actuation stem 19 and the main body 2.

Conveniently, to protect the actuation stem 19 there is a plug 27 made, for example, of stainless steel.

The first flanged assembly 10 comprises a sleeve 28 and a first flange 29 which can be associated with the first connecting pipe of the refrigeration system or the like, for example, by means of braze welding.

In more detail, the sleeve 28, made for example of brass or stainless steel, is hermetically and integrally associated with the first end 2a of the main body 2 by means of first screw means 30 along the longitudinal axis 3.

In the embodiment proposed, the first screw means 30 comprise a series of first screws, completed with first one-way washers, engaged in respective first threaded holes 31 defined on the main body 2.

Conveniently, the sleeve 28 defines one of the sealing seats 22 for the respective sealing berth 18.

The seal between the main body 2 and the sleeve 28 is ensured by a pair of two annular gaskets 32 and 33 which are arranged, respectively, to provide a radial seal and a face seal.

In more detail, the two annular gaskets 32 and 33 are arranged in adapted seats which are dimensioned so that, with the dehydrating filter 1 assembled and the sleeve 28 in abutment against the main body 2, the elastomers end up being contained inside closed chambers and cannot be forced out from their seats by the pressure.

Conveniently, the sleeve 28, on the opposite side from the side for coupling with the main body 2, has a flat face 34 with a central hole for the passage of fluid, with a diameter greater than or equal to the inside diameter of the through hole 20 of the ball 16, and two concentric recessed radial seats for accommodating another two annular gaskets 35 and 36 which are arranged, respectively, to provide a radial seal and a front seal.

In this case too, with the first flanged assembly 10 assembled, these other two annular gaskets 35 and 36 are in hermetically closed chambers and cannot be forced out by the pressure.

The first, perforated flange 29, for example made of brass or stainless steel, is hermetically and integrally associated with the sleeve 28 by means of second screw means 37 along the longitudinal axis 3.

In the embodiment proposed, the second screw means 37 comprise a series of second screws, complete with second one-way washers, engaged in respective second threaded holes 38 defined on the sleeve 28 on the opposite side with respect to the main body 2 and angularly offset with respect to the first screws of the first screw means 30.

The filtering assembly 9 comprises: a mesh filter sleeve 40, made for example of stainless steel, which has a substantially tubular geometric shape; a first and a second cylindrical filtering cartridge 41 and 42, which are fitted in series on the mesh filter sleeve 40; a first and a second filter holder disk 43 and 44, made for example of aluminum, which are associated, respectively, with the end portions 40a and 40b of the mesh filter sleeve 40 so as to axially couple the filtering cartridges 41 and 42 and the mesh filter sleeve 40 to each other; three cloth disks 45, 46 and 47 interposed, respectively, between: the first filter holder disk 43 and the first filtering cartridge 41, between the two filtering cartridges 41 and 42 and between the second filtering cartridge 42 and the second filter holder disk 44.

The filtering assembly 9 is therefore accommodated in the second chamber 5 so that the first filter holder disk 43 is located in the central hole 6 of the main body 2 and so that the second filter holder disk 44 is located in the second flanged assembly 11.

Conveniently, the first filter holder disk 43 is provided with a dedicated annular gasket 48 lodged in a respective groove 49 in such a way that, with the filtering assembly 9 installed, it is interposed between an abutment surface 50 of the main body 2 outside the central hole 6 and the filtering assembly 9.

The second flanged assembly 11 comprises a second, blind flange 51 and elastic means 52 interposed between the second, blind flange 51 and the filtering assembly 9.

In more detail, the second, blind flange 51, for example made of brass or stainless steel, is hermetically and integrally associated with the second end 2a of the main body 2 by means of third screw means 53 along the longitudinal axis 3.

These third screw means 53 comprise a series of third screws, complete with third one-way washers, engaged in respective third threaded holes defined on a radially-protruding flanged rim 54 of the main body 2.

Conveniently, the second, blind flange 51 has a portion 51a which protrudes axially in the direction of the main body 2 so as to be inserted hermetically into the main body 2 at its second end 2b.

The seal between the main body 2 and the second, blind flange 51 is ensured by a pair of further annular gaskets 55 and 56, one providing a front seal and the other a radial seal, which are arranged in adapted seats that are dimensioned so that, when the dehydrating filter 1 is assembled, the elastomers are in hermetically closed chambers and cannot be forced out of their seats by the pressure.

Furthermore, on the second, blind flange 51, in a central position there is a first threaded hole 57 into which to screw the faucet 12 for charging/discharging coolant gas.

The seal between flange and faucet is ensured by the presence of an annular gasket 58.

The elastic means 52 comprise a helical spring 59, made for example of stainless steel, partially fitted on a protrusion 44a which protrudes axially from the second filter holder body 44 so as to be guided along the longitudinal axis 3.

The thrust exerted by the helical spring 59 ensures the seal of the dedicated annular gasket 48 interposed between the filtering assembly 9 and the main body 2.

The third flanged assembly 13 comprises a third, perforated flange 60, for example made of brass or stainless steel, which is hermetically and integrally associated with the lateral opening 14 by means of fourth screw means 61 along the transverse axis 15.

Advantageously, the third, perforated flange 60 can be associated with the second connecting pipe of the refrigeration system or the like, for example, by means of braze welding.

The fourth screw means 60 comprise a series of fourth screws, complete with fourth one-way washers, engaged in respective fourth threaded holes defined on the main body 2.

On the main body 2, perpendicularly to the transverse axis 15, there is a flat surface 62 in which there are seats for final annular gaskets 63 and 64 which are arranged, respectively, to provide a radial seal and a front seal in order to ensure the hermetic seal of the third, perforated flange 60 on the main body 2.

In this case too, with the third flanged assembly 13 assembled, the final annular gaskets 63 and 64 are in hermetically closed chambers and cannot be forced out by the pressure.

Completing the dehydrating filter 1 is a gas charging nipple 65, for example made of brass or stainless steel, which is connected to the second chamber 5 on the opposite side with respect to the lateral opening 14.

In more detail, in the main body 2, in a position coaxial to the transverse axis 15, there is a second threaded hole 66 into which the charging nipple 65, which is provided with a metallic plug 67, is screwed.

The seal between the nipple 65 and the main body 2 is ensured by the presence of a suitable annular gasket 68.

In the absence of this nipple 65, a plug can be provided.

In the embodiment proposed, the screws of the cited screw means and the respective one-way washers are made for example of stainless steel, and the cited annular gaskets are made of neoprene, HNBR (Hydrogenated Nitrile Butadiene Rubber) or EPDM (Ethylene-Propylene Diene Monomer), depending on the refrigerant fluids used.

Finally, the dehydrating filter 1 can have a cutoff system (a shutoff faucet) integrated in the main body.

The dehydrating filter 1 operates substantially like a ball valve fitted with a filter for refrigerant fluids, particularly in the sectors of air conditioning and refrigeration.

When the actuation stem 19 is in the OPEN position, the flow of coolant can pass through the dehydrating filter 1, whereas when the stem is in the CLOSED position, the ball 16 stops the passage of the fluid because it is hermetically sealed on the sealing berths 17 and 18.

The dehydrating filter 1 can be connected to a refrigeration system as follows.

Once the perforated flanges 29 and 60 have been unscrewed and separated from the main body 2, they can be welded to the pipes to be connected.

After welding, when they have cooled, the perforated flanges 29 and 60 are reconnected to the main body 2 using the screws complete with one-way washers, and taking care that the annular sealing gaskets are correctly inserted in the dedicated seats.

Furthermore, using the faucet 12 it is possible to:
- release the residual pressure in total safety when it is decided to change the filtering cartridges 41 and 42;
- recharge the entire system with coolant during the stages of testing/trialling/bringing into service;
- create the "vacuum" prior to the stage of bringing into service.

In practice it has been found that the dehydrating filter, according to the present invention, achieve the set aim and objects.

In fact, by virtue of the fact that the main body 2 and the sleeve 28 of the ball valve are not welded, since it is not necessary to perform TIG welding to close the filter, the dehydrating filter according to the invention is not affected by the problems of damage to elastomeric gaskets and to the berths as a consequence of possible overheating of the materials.

The seal between these two components is in fact taken care of by a pair of annular gaskets which are positioned in closed accommodation chambers so as to prevent the gaskets from being forced out of place.

Another advantage of the dehydrating filter, according to the invention, consists in that the absence of TIG welds leads to fewer discarded seals at the production stage, and therefore it drastically reduces the number of pieces not eligible for testing.

Another advantage of the dehydrating filter, according to the invention, consists in that the lack of welds also ensures the quality of the seal of the product over time.

In fact, as there is no TIG weld, there also cannot be any non-visible blisters inside it which could result in leaks over time owing to the use of the component at high operating pressures (in particular with refrigerant fluids such as R744 in a transcritical state).

Another advantage of the dehydrating filter, according to the invention, consists in that it makes it possible to facilitate and render less problematic the welding of the pipes to the filter by the end installation technician.

While in standard applications the installation technician has to braze weld the pipes to the filter while wrapping it in a wetted rag and taking great care not to overheat it, with the dehydrating filter according to the invention, this problem is overcome because the end user will remove the external flanges of the filter, then braze weld the pipes to the external flanges, and then remount the flanges by screwing and tightening the screws, complete with one-way washers.

In this manner, the operation to braze weld the pipes to the valve is not problematic in any way and can be carried out without taking any special precautions regarding the overheating of the component.

Another advantage of the dehydrating filter, according to the invention, consists in that it can be dismounted from the system without needing to cut the connecting pipes as occurs for conventional dehydrating filters.

In fact, if the filter should need to be replaced for any reason, for example because in particular use cases the berths should become worn down by repeated opening/closing operations, the replacement operation is very simple.

It is in fact sufficient to disconnect the external flanges by acting on the connecting screws, extract the filter body to be replaced, insert a new filter body and reconnect the external flanges to the filter body, re-tightening the screws.

Basically the external flanges always remain connected to the system and, if necessary, only the filter body is changed, obviously complete with the internal components and sleeve.

Another advantage of the dehydrating filter, according to the invention, consists in that, by virtue of the double annular gasket - radial and front - at every possible leak point of the valve, it is possible to have an absolute assurance of the hermetic seal of the dehydrating filter in the immediate future, but above all for the entire life of the component.

Another advantage of the dehydrating filter, according to the invention, consists, by virtue of the external flanges which can be dismounted from the main body, in the possibility to modify the type of connections of the device without needing to change the entire filter.

If a filter has external flanges with seats for welding the pipe, these can be replaced for example with flanges with SAE male threading or flanges with pipe seats of various sizes.

Since the filter is a component in which the filtering elements need to be periodically replaced by removing only the second, blind flange, the presence of a ball valve integrated in the body makes it possible to isolate it partially from the system. The installation technician will therefore need to have only another faucet.

Furthermore, the presence of "accessories" such as the gas charging/discharging faucet makes it possible to release the pressure remaining in the filter prior to replacing the cartridges, to restore the necessary quantity of gas after the filtering cartridges have been replaced, or to apply measurement instruments.

Another accessory, "condensation drain", makes it possible to manually drain condensation in total safety without interrupting operation of the system.

Another advantage of the dehydrating filter, according to the invention, consists in the fact that it is ecologically sustainable by virtue of the possibility to replace the filtering cartridges, differently from conventional hermetic filters which, typically, are disposable.

The dehydrating filter, thus conceived, is susceptible of numerous modifications and variations, all of which are within the scope of the appended claims.

For example, the dehydrating filter, according to the invention, can be made of many types of material (completely made of brass, of steel or with brass parts mixed with steel parts) according to requirements; the gasket seals can also be made of different materials according to the end application and the coolant gas used; the external flanges of the invention can have different types of connection to the end application but all are included in the patent that we intend to apply for (with ODS pocket as described in the present description, for butt-welding of stainless steel pipes or with male or female threading according to any standard); the internal filtering elements can be of different types and different shapes and different materials, according to the gas present in the system; the filter can be produced with the body and sealing flange made both of brass and of stainless steel, and the elastomeric sealing gaskets must be capable of being produced in different blends depending on compatibility with the various refrigerant fluids.

Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102024000020731 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A dehydrating filter (1), particularly for air conditioning and/or refrigeration systems, **characterized in that** it comprises:
- a main body (2) which has a substantially axially symmetrical geometry with respect to a longitudinal axis (3) with a circular base and defines inside it a first chamber (4) and a second chamber (5) which communicate with each other through a central hole (6); said chambers (4, 5) being of the type that is open at the ends (2a, 2b) of said main body (2) for the insertion inside them of a valve assembly (7) and of a filtering assembly (9), respectively;
- said valve assembly (7) being accommodated in said first chamber (4) and having an actuation axis (8) which is substantially perpendicular to said longitudinal axis (3);
- said filtering assembly (9) being accommodated in said second chamber (5);
- a first flanged assembly (10) removably associated with said main body (2) at a first one of said ends (2a) thereof which is located on the side of said first chamber (4) so as to close said first chamber (4); said first flanged assembly (10) being shaped so that it can be connected to a first connecting pipe of a refrigeration system or the like;
- a second flanged assembly (11) removably associated with said main body (2) at a second one of said ends (2b) thereof which is opposite with respect to said first end (2a) on the side of said second chamber (5) so as to close said second chamber (5); said second flanged assembly (11) being shaped so that it can be connected to a faucet (12) for charging and discharging a refrigerant gas;
- a third flanged assembly (13) removably associated with said main body (2) at a lateral opening (14) thereof which is located at a portion of said second chamber (5) and extends along a transverse axis (15) with respect to said longitudinal axis (3); said third flanged assembly (13) being shaped so that it can be connected to a second connecting pipe of a refrigeration system or the like.

2. The dehydrating filter (1) according to claim 1, **characterized in that** said valve assembly (7) comprises:
- a ball (16) which is accommodated in said first chamber (4) and is provided with a through hole (20), said central hole (6) having a diameter greater than or equal to the inside diameter of the through hole (20) of said ball (16);
- two sealing berths (17, 18) accommodated, respectively, in two sealing seats (17, 18) obtained, respectively, on said main body (2) and on said first flanged assembly (10) so as to support said ball (16) and hold it in position;
- an actuation stem (19) extending along said actuation axis (8) and having a first end portion (19a) in a shape mating arrangement with a respective contoured cavity (25) of said ball (16) for the rotation of said ball (16) about said actuation axis (8) and a second end portion (19b) which is opposite with respect to said first end portion (19a) and protrudes from said main body (2) through a passage hole (26) defined in said first chamber (4) along said actuation axis (8).

3. The dehydrating filter (1) according to claim 2, **characterized in that** said first flanged assembly (10) comprises:
- a sleeve (28) which is hermetically and integrally associated with said first end (2a) by means of first screw means (30) along said longitudinal axis (3);
- a first, perforated flange (29) which is hermetically and integrally associated with said sleeve (28) by means of second screw means (37) along said longitudinal axis (3);
said sleeve (28) defining one of said sealing seats (17, 18).

4. The dehydrating filter (1) according to one or more of the preceding claims, **characterized in that** said filtering assembly (9) comprises:
- a mesh filter sleeve (40) which has a substantially tubular geometric shape;
- a first and a second filtering cartridge (41, 42) which are fitted in series on said mesh filter sleeve (40);
- a first and a second filter holder disk (44) which are associated, respectively, with the end portions (40a, 40b) of said mesh filter sleeve (40) so as to axially couple said filtering cartridges (41, 42) and said mesh filter sleeve (40) to each other;
- three cloth disks (45, 46, 47) which are interposed, respectively, between: said first filter holder disk (43) and said first filtering cartridge (41), between said filtering cartridges (41, 42) and between said second filtering cartridge (42) and said second filter holder disk (44);
said filtering assembly (9) being accommodated in said second chamber (5) so that said first filter holder disk (43) is located in said central hole (6) of said main body (2) and so that said second filter holder disk (44) is located in said second flanged assembly (11).

5. The dehydrating filter (1) according to one or more of the preceding claims, **characterized in that** said second flanged assembly (11) comprises:
- a second, blind flange (51) which is hermetically and integrally associated with said second end (2b) by means of third screw means (53) along said longitudinal axis (3);
- elastic means (52) which are interposed between said second, blind flange (51) and said filtering assembly (9).

6. The dehydrating filter (1) according to claims 4 and 5, **characterized in that** said elastic means (52) comprise a helical spring (59) partially fitted on a protrusion (44a) which protrudes axially from said second filter holder body (44) so as to be guided along said longitudinal axis (3).

7. The dehydrating filter (1) according to one or more of the preceding claims, **characterized in that** said third flanged assembly (13) comprises a third, perforated flange (60) which is hermetically and integrally associated with said lateral opening (14) by means of fourth screw means (61) along said transverse axis (15).

8. The dehydrating filter (1) according to one or more of the preceding claims, **characterized in that** it comprises a charging nipple (65) which communicates with said second chamber (5) on the opposite side with respect to said lateral opening (14).
